# EUROPÄISCHE PATENTSCHRIFT

(11) **EP 3 624 979 B1**
(45) Veröffentlichungstag und Bekanntmachung des Hinweises auf die Patenterteilung: **02.08.2023**
(21) Anmeldenummer: 18724870.3
(22) Anmeldetag: 15.05.2018
(51) Int. Cl.: B23K 1/005, B23K 3/06, B23K 101/42, B23K 1/00

(54) **ANORDNUNG ZUM AUFBRINGEN VON LOTKUGELN AUF EIN SUBSTRAT**
ASSEMBLY FOR APPLYING SOLDER BALLS TO A SUBSTRATE
DISPOSITIF D'APPLICATION DE BILLES DE SOUDURE SUR UN SUBSTRAT

(30) Priorität: 18.05.2017 DE 102017110830
(43) Veröffentlichungstag der Anmeldung: 25.03.2020
(73) Patentinhaber: Azdasht, Ghassem, 13591 Berlin (DE)
(72) Erfinder: Azdasht, Ghassem, 13591 Berlin (DE)
(74) Vertreter: Weisse, Renate
(86) Internationale Anmeldenummer: PCT/EP2018/062571
(87) Internationale Veröffentlichungsnummer: WO 2018/210844

(56) Entgegenhaltungen:
- JP-A- 2008 100 830
- JP-A- 2010 162 574
- JP-A- 2011 115 819

## Beschreibung

### Technisches Gebiet

Die Erfindung betrifft eine Anordnung zum Aufbringen von Lot aus Lotkugeln auf ein Substrat mit den Merkmalen des Anspruchs 1.

Eine solche Anordnung wird insbesondere beim Bonding von Halbleiterschaltungen verwendet. Um möglichst viele Verbindungsstellen auf kleinem Raum aufbringen zu können und Halbleiterschaltungen mit geringen Abmessungen herstellen zu können, sind geringe Abmessungen der Lotkugeln vorteilhaft. Es werden Lotkugeln mit Durchmessern im Bereich unterhalb 100 µm, beispielsweise 40 µm eingesetzt. Die Handhabung der kleinen Kügelchen ist schwierig. Es ist nicht möglich, einfach Kugeln aus einem Reservoir zu entnehmen und auf ein Substrat aufzubringen. Die Kugeln müssen vereinzelt und kontrolliert bewegt werden.

### Stand der Technik

Es ist bekannt, die Lotkugeln aus einem Reservoir kreisförmig auf einer Scheibe zu platzieren. Die Kugeln werden durch Drehung der Scheibe über den Verbindungspunkt bewegt. Dort werden sie auf das Substrat aufgebracht. Hierfür ist eine Verschlusseinrichtung vorgesehen. Nach dem Aufbringen der Kugel wird die Kugel weitergedreht und der Vorgang so oft wie erforderlich wiederholt.

Zwischen dem Aufbringen der Kugeln sind jeweils Drehungen der Scheibe und eine genaue Positionierung erforderlich. Dies erfordert Zeit. Die Anordnung unterliegt durch die beweglichen Teile einem gewissen Verschleiß. Außerdem müssen harte Materialien verwendet werden. Solche Materialien sind teuer. Mit der Anordnung auf einer Scheibe kann immer nur eine Kugel auf das Substrat aufgebracht werden.

JP 2010-162574 A (welche die Basis für den Oberbegriff des Anspruchs 1 bildet) offenbart eine Anordnung zum Aufbringen von Lotkugeln. Die Lotkugeln laufen durch einen L-förmigen Kanal. Am Knick des Kanals ist ein Anschluss vorgesehen, mit welchem eine Druckdifferenz erzeugt werden kann. Damit kann zunächst eine Kugel angesaugt. Danach wird die Kugel durch Beaufschlagen mit Überdruck einzeln in einen vertikalen Schenkel des Kanals hinter dem Knick entgegen der Schwerkraft nach oben gedrückt. Bei der Anordnung besteht die Gefahr, dass die zunächst angesaugte Kugel zurück in den Zuführkanal gelangt. Die Herstellung einer solchen Anordnung ist kompliziert.

JP 2008 100 830 A offenbart eine Anordnung zur Trennung von Lotkugeln mit einem senkrechten Zuführkanal, in welchem eine Kugel angesaugt werden kann und nachfolgende Kugeln blockiert sind. JP 2011 115 819 A offenbart eine Anordnung, bei welcher Lotkugeln mittels Laser geschmolzen werden und das geschmolzene Metall mit einem Inertgasstrom zum Ausgang bewegt wird.

### Offenbarung der Erfindung

Es ist Aufgabe der Erfindung, eine Anordnung der eingangs genannten Art zu schaffen, die wirtschaftlicher ist und mit der die Kugeln schneller auf einem Substrat aufgebracht werden können. Erfindungsgemäß wird die Aufgabe mit einer eingangs genannten Anordnung mit den kennzeichnenden Merkmalen des Anspruchs 1 gelöst.

Bei der Anordnung kann eine Kugel im Zuführkanal festgehalten werden, indem eine Druckdifferenz zwischen Saugkanal und Zuführkanal erzeugt wird, so dass eine Kugel vom Saugkanal angesaugt wird. Dies kann entweder durch einen Unterdruck im Saugkanal oder durch einen Überdruck im Zuführkanal oder beides bewirkt werden. Der Saugkanal hat im Übergangsbereich zwischen Zuführkanal und Saugkanal einen geringeren Durchmesser als eine Kugel. Die Kugel kann also nicht in den Saugkanal gelangen. Sie wird im Übergangsbereich fixiert. Der Zuführkanal hat einen Durchmesser, der so groß ist, dass die Kugeln leicht hindurchbewegt werden können. Der Zuführkanal hat einen Durchmesser, der kleiner als der doppelte Durchmesser einer Kugel ist. Eine nachfolgende Kugel kann die im Übergangsbereich fixierte Kugel nicht passieren. Durch kurzzeitige Änderung der Druckverhältnisse auf eine geringe Druckdifferenz oder auf eine Druckdifferenz Null kann die fixierte Kugel freigegeben werden. Diese gelangt dann zur Ausgabe-Öffnung. Die Druckdifferenz wird anschließend wieder erhöht, so dass die nächste Kugel ebenfalls fixiert wird.

Anders als bekannte Anordnungen erfordert die Anordnung keine beweglichen Teile, sondern ist nur über die Steuerung der Druckverhältnisse steuerbar. Diese kann erheblich schneller erfolgen, als die Bewegung von Teilen, beispielsweise einer Scheibe.

Die Vereinzelung und Steuerung der Kugeln ist besonders vorteilhaft, wenn drei oder mehr Saugkanäle in Bewegungsrichtung der Lotkugeln hintereinander im Zuführkanal münden, und die Steuermittel derart eingerichtet sind, dass die Ausgabeöffnungs-seitige Lotkugel freigebbar ist, während zumindest eine Lotkugel an einem der anderen Saugkanäle zurückhaltbar ist. Dadurch wird die Gefahr vermieden, dass eine oder mehrere Kugeln den Ubergangsbereich passieren, wenn die fixierte Kugel freigegeben wird. Die im Zuführkanal stromaufwärtige, fixierte Kugel hält die übrigen Kugeln während der Freigabe zurück und blockiert den Zuführkanal. Bei drei oder mehr Saugkanälen mit drei oder mehr Übergangsbereichen können die Kugeln nacheinander am jeweils nächsten Saugkanal fixiert werden. Hierzu wird jeweils die Druckdifferenz nacheinander an den Saugkanälen abgesenkt.

Vorteilhafterweise ist der Zuführkanal mit einem Gasdruck oberhalb des Atmosphärendrucks beaufschlagt. Hierzu kann der Zuführkanal mit einer Gasquelle mit Stickstoff oder einem anderen Inertgas mit erhöhtem Druck verbunden sein. Ein Inertgas verhindert insbesondere, dass die Lotkugeln oxidieren oder anderweitig chemisch mit der Umgebung reagieren und zu kalten Lötstellen führen. Alternativ wird ein Unterdruck am Saugkanal angelegt.

Bei einer besonders vorteilhaften Ausgestaltung der Erfindung sind die Saugkanäle mit der Atmosphäre verbunden und die Steuermittel umfassen einen Shutter oder ein Ventil zum Herstellen und Unterbrechen der Verbindung zwischen Saugkanal und Atmosphäre. Jedes Mal, wenn der Shutter öffnet, wird eine Druckdifferenz zwischen den Drücken im Saugkanal und im Zuführkanal erzeugt. Ein solcher Shutter oder ein Ventil lässt sich sehr schnell Öffnen und Schließen. Entsprechend schnell können Lotkugeln aufgebracht werden. Statt zur Atmosphäre kann der Saugkanal auch in einem anderen Druckraum beispielsweise mit Unterdruck münden.

Der Zuführkanal mündet erfindungsgemäß in einen Ausgangskanal, wobei der Ausgangskanal vorzugsweise die Ausgangsöffnung aufweist, über welche Lot auf einem Substrat aufbringbar ist, und ein Laser ist vorgesehen, dessen Strahlung durch den Ausgangskanal zur Ausgangsöffnung leitbar ist, und dessen Strahlung derart ausgebildet ist, dass das Lot der Lotkugel durch Einwirkung der Strahlung auf das Substrat befördert wird. Die Kugel wird also vom Zuführkanal in den Ausgangskanal bewegt. Durch den Ausgangskanal wird ein Laserstrahl zur Ausgangsöffnung geleitet. Mit dem Laserstrahl kann eine Lotkugel geschmolzen und auf das Substrat aufgebracht werden.

Erfindungsgemäß bilden Zuführkanal und Ausgangskanal einen Winkel. Der Zuführkanal verläuft im Wesentlichen horizontal. Bei einer leichten Neigung des Zuführkanals nach unten in Richtung Ausgangskanal erfährt die Kugel eine Schwerkraft und rollt ohne weitere Kräfte zum Ausgangskanal. Dabei kann die Neigung im Bereich vor dem Ausgangskanal größer sein als im übrigen Bereich. Der Ausgangskanal ist vertikal oder annähernd vertikal ausgebildet.

Die Kugel fällt dann aufgrund der Schwerkraft nach unten zur Ausgangsöffnung. Bei einer gewinkelten Anordnung lässt sich ein Laser und/oder eine Umlenk- und/oder Fokussier-Optik für den Laser leicht am oberen Ende installieren. Eine Fokussieroptik, beispielsweise eine Linse kann aber auch an den übrigen Stellen im Ausgangskanal installiert sein.

Bei einer Anordnung für sehr kleine Kugeln sind kleine Kanäle herzustellen. Es ist daher bei einer besonders vorteilhaften Ausgestaltung der Erfindung eine Plattenanordnung aus mehreren plan aufeinanderlegbaren und fixierbaren Platten vorgesehen, wobei der Zuführkanal und die Saugkanäle von Schlitzen in den Platten der Plattenanordnung gebildet sind. Die Platten können so aufeinander angeordnet werden, dass die Schlitze von der jeweils benachbarten Platte verschlossen werden. Die Schlitze können mittels Laser mit hoher Genauigkeit in der gewünschten Lage und Größe in den Platten hergestellt werden. Alternativ können die Kanäle und Bohrungen in einem Block hergestellt werden, beispielsweise mit 3-D-Druck.

Bei einer weiteren Ausgestaltung der Erfindung kann die Plattenanordnung eine der Zuführkanal-Platte mit dem Zuführkanal aufweisen und eine daran anliegende Führungs-Platte, die im Bereich des Zuführkanals einen Führungsschlitz zum Führen der Bewegung der Lotkugeln im Zuführkanal aufweist, der eine geringere Breite hat als die Breite des Zuführkanals. Vorzugsweise ist die Führungsplatte unterhalb der Platte mit dem Zuführkanal angeordnet. Die Kugel läuft dann auf dem Führungsschlitz wie auf einer Schiene. Dadurch ist gewährleistet, dass die Kugeln mittig im Zuführkanal bewegt werden und nicht akkumulieren und blockieren können.

Vorzugsweise weist die Plattenanordnung eine der Zuführkanal-Platte benachbarte erste Saugkanal-Platte auf, die in dem dem Reservoir abgewandten Endbereich des Zuführkanals in Bewegungsrichtung der Lotkugeln hintereinander angeordnete Bohrungen aufweist, welche den Übergangsbereich zwischen Saugkanal und Zuführkanal bilden und auf der der Zuführkanal-Platte abgewandten Seite der ersten Saugkanal-Platte eine zweite Saugkanal-Platte, welche Schlitze aufweist, welche die Bohrungen mit der Atmosphäre oder einem zur Atmosphäre führenden Kanal verbinden. Die Bohrungen in der ersten Saugkanal-Platte befinden sich im zusammengesetzten Zustand der Platten oberhalb des Schlitzes für den Zuführkanal kurz vor dessen Ende. Sie münden jeweils in einem unterschiedlichen der Schlitze in der darüber angeordneten zweiten Saugkanal-Platte. Die Schlitze in der zweiten Saugkanal-Platte können, müssen aber nicht miteinander verbunden sein. Sie münden in einer Öffnung zur Atmosphäre. Es ist aber auch möglich, die Schlitze zur Oberfläche zu führen und mit einem Unterdruckraum zu verbinden.

Eine weitere Ausgestaltung der Erfindung sieht vor, dass das Reservoir, die Ausgabe-Öffnung, der Zuführkanal und der Saugkanal in einem Modul vereint sind und wenigstens ein weiteres, gleichartiges Modul vorgesehen ist, das mit dem Modul eine Modulbaugruppe bildet, wobei die Ausgabe-Öffnungen der Module nebeneinander oberhalb eines Substrats positionierbar sind. Anders als eine Anordnung mit Scheiben bildet die vorliegende Anordnung einen kompakten Block, der an seinen Planseiten mit anderen, solchen Blöcken verbindbar ist. Auf diese Weise können mehrere Kugeln gleichzeitig auf dem Substrat aufgebracht werden. Dadurch kann die Zeit zur Bestückung eines Substrats erheblich reduziert werden.

Mehrere einzeln ausrichtbare Module können zu einer als Ganzes ausrichtbaren Modulbaugruppe vereinigt werden.

Ausgestaltungen der Erfindung sind Gegenstand der Unteransprüche. Ein Ausführungsbeispiel ist nachstehend unter Bezugnahme auf die beigefügten Zeichnungen näher erläutert.

### Kurze Beschreibung der Zeichnungen

- Fig.1: ist eine schematische Darstellung eines Vertikalschnitts einer Anordnung zum Aufbringen von Lotkugeln auf ein Substrat.
- Fig.2a-d: zeigen Ausgestaltungen für Platten einer Plattenanordnung, die in einer Anordnung nach Figur 1 verwendet werden.
- Fig.3: illustriert die Wirkungsweise eines Führungsschlitzes in der Platte aus Figur 2d der Plattenanordnung aus Figur 2.
- Fig.4: ist eine schematische Darstellung eines Ausgangskanals in einer Anordnung zum Aufbringen von Lotkugeln nach Figur 1.
- Fig.5: ist ein Vertikalschnitt in einer Schnittebene A-A in Figur 1 mit angesaugter Kugel.
- Fig.6: ist ein Vertikalschnitt in der Schnittebene A-A in Figur 1 mit freigegebener Kugel.
- Fig.7: illustriert eine Anordnung mit mehreren Modulen zum Aufbringen mehrerer Lotkugeln im gleichen Zeitraum.
- Fig. 8: ist eine schematische Darstellung der aufgebrachten Lotkugeln auf einem Substrat mit einer Modularen Anordnung aus einer Vielzahl von Modulen.
- Fig.9: ist eine schematische Darstellung der aufgebrachten Lotkugeln auf einem Substrat, mit der modularen Anordnung aus Figur 8, die um eine horizontale Achse gekippt wurde.
- Fig. 10: ist eine schematische Darstellung der aufgebrachten Lotkugeln auf einem Substrat, mit der modularen Anordnung aus Figur 8, die um eine vertikale Achse gekippt wurde.
- Fig.11: illustriert, wie sich die Abstände zwischen den Lotkugeln ändern, wenn die modulare Anordnung um eine vertikale Achse gekippt wurde.
- Fig. 12: illustriert, wie Abstände der Lotkugeln durch eine Verkippung der Module in einer modularen Anordnung gegeneinander geändert werden können.
- Fig.13: illustriert das Ausmaß einer Verkippung eines Moduls zur Einstellung einer gewünschten Position.

### Beschreibung der Ausführungsbeispiele

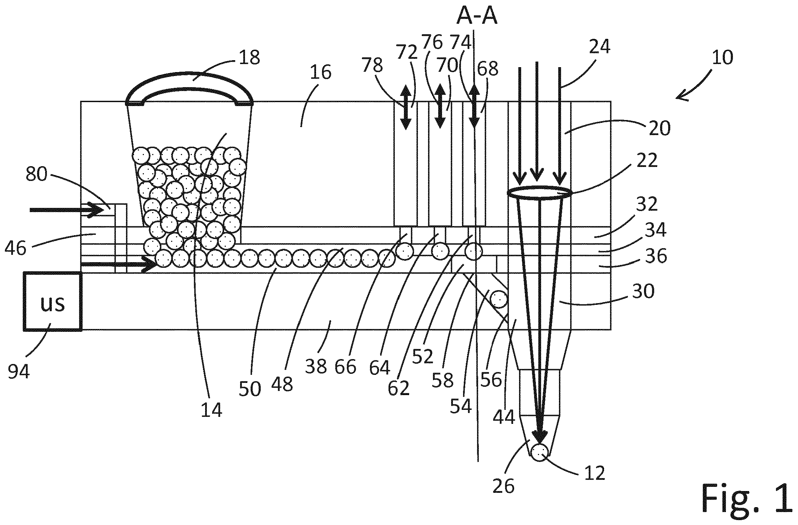

Figur 1 ist eine schematische Darstellung eines Bond-Kopfes, der allgemein mit 10 bezeichnet ist. Der Bond-Kopf 10 ist hier er besseren Übersicht halber ohne die erforderliche Steuerung und Halterung dargestellt. Ein solcher Bond-Kopf wird oberhalb eine Substrats (nicht dargestellt) angeordnet. Lotkugeln 12 aus einem Reservoir 14 werden auf die nachstehend beschriebene Weise vereinzelt und auf das Substrat aufgebracht. Ein Beispiel für ein solches Substrat ist ein Wafer.

Der Bond-Kopf 10 weist einen Block 16 auf. Im vorliegenden Ausführungsbeispiel ist der Block 16 aus Aluminium gefertigt. Es versteht sich, dass auch jedes andere Material geeignet sein kann. Es ist nicht erforderlich, teure, harte Materialien zu verwenden. Der Block 16 ist im Wesentlichen quaderförmig, kann aber auch eine andere äußere Form annehmen, wenn dies sinnvoll ist.

In dem Block 16 ist ein großer Hohlraum vorgesehen, der als Reservoir 14 dient. Das Reservoir 14 ist dicht mit einem Deckel 18 verschlossen. Der Block 16 weist ferner eine breite Durchgangsbohrung 20 auf. Die Durchgangsbohrung 20 dient als Teil eines Ausgangskanals 30. In der Durchgangsbohrung ist eine Fokussierlinse 22 angeordnet. Die Fokussierlinse 22 oder eine Linsenanordnung dient zur Fokussierung eines Laserstrahls 24 im Bereich einer Ausgangsöffnung 26. Der Laserstrahl 24 dient zum Schmelzen einer in der Ausgangsöffnung befindlichen Lotkugel 12.

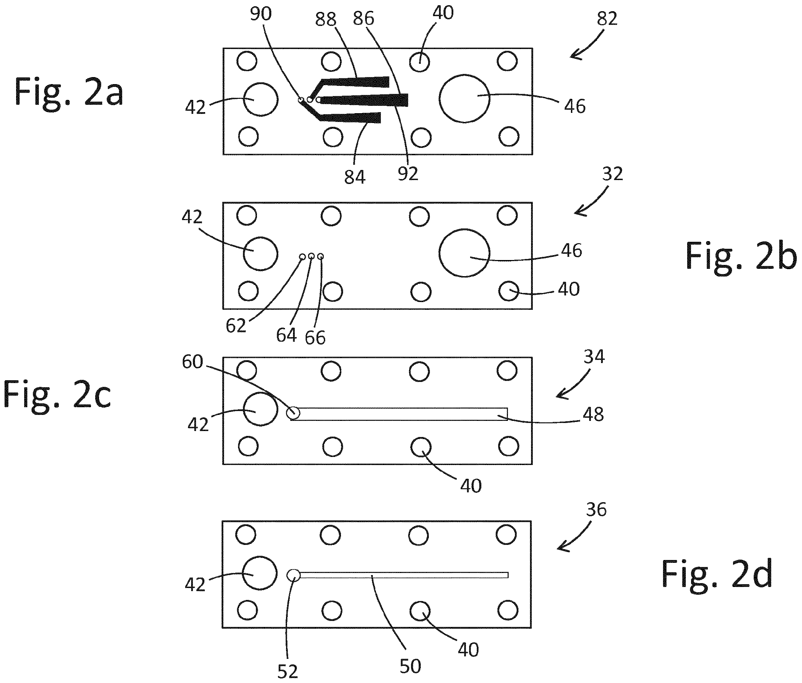

Der Block 16 ist mit einer Plattenanordnung aus mehreren aufeinanderliegenden Platten 32, 34 und 36 verbunden. Die Platten 32, 34 und 36 sind in den Figuren 2b, 2c und 2 d gesondert dargestellt. Die Plattenanordnung mit den Platten 32, 34 und 36 sitzt zwischen dem Block 16 und einer Basis 38. Alle Teile können aus Aluminium oder einem anderen geeigneten Material gefertigt sein. Zur Befestigung sind der Block 16 und die Platten der Plattenanordnung mit Bohrungen 40 entlang des Randes versehen, die in Figur 2 gut zu erkennen sind. Im vorliegenden Ausführungsbeispiel sind 10 Bohrungen 40 vorgesehen. Es können aber auch mehr oder weniger Bohrungen 40 vorgesehen sein. Durch diese Bohrungen kann eine Schraube gesteckt werden, die mit einer Gewindebohrung in der Basis fest verschraubt wird. Der Kopf der Schraube kann in einer Aussparung im Block 16 versenkt werden.

Die Platten 32, 34 und 36 sind jeweils mit einer Bohrung 42 versehen. Die Bohrung 42 jeder Platte fluchtet mit der zugehörigen Bohrung 42 in den anderen Platten und der Durchgangsbohrung 20. Zusammen mit einer korrespondierenden Bohrung 44 in der Basis 38 bilden diese einen Teil des Ausgangskanals 30.

Die Platte 32 ist ferner mit einer breiten Bohrung 46 versehen. Die Bohrung 46 fluchtet mit dem Hohlraum, der das Reservoir 14 bildet und hat in etwa denselben Durchmesser. Dies ist in Figur 1 gut zu erkennen. In der Platte 34 ist ein Schlitz 48 vorgesehen. Der Schlitz 48 bildet den Teil eines Zuführkanals durch den die Kugeln 12 vom Reservoir 14 zur Ausgangsöffnung 26 geführt werden. Der Schlitz 48 erstreckt sich von unterhalb der Bohrung 46 bis kurz vor den Bereich der Bohrung 42. Die Breite des Schlitzes 48 ist größer als die Breite einer zu verwendenden Kugeln 12 aus dem Reservoir 14. Dann können sich die Kugeln 12 gut durch den Schlitz 48 bewegen. Die Breite des Schlitzes 48 ist aber so klein, dass keine zweite Kugel 12 neben eine andere Kugel passt. Es kann also immer nur eine Kugel 12 an einer Stelle durch den Schlitz 48 bewegt werden. Die Kugeln 12 laufen also einzeln hintereinander durch den Schlitz 48.

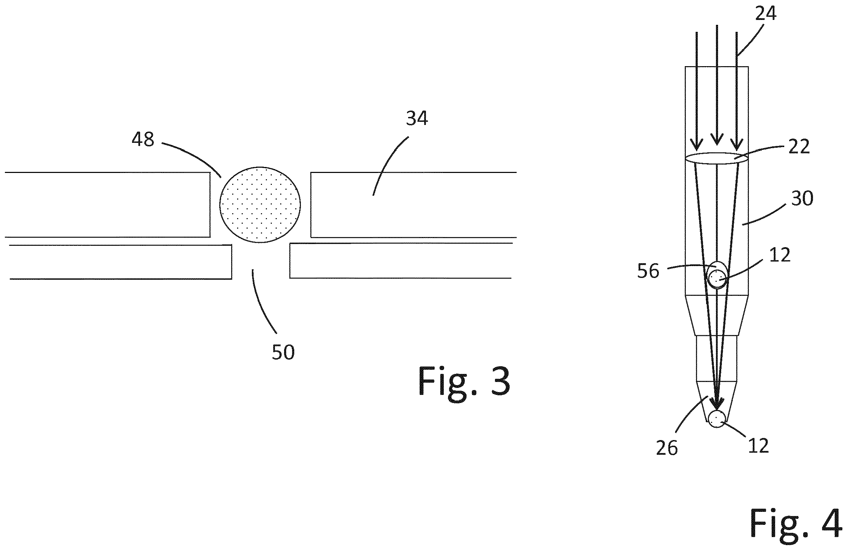

Im vorliegenden Ausführungsbeispiel werden die Kugeln 12 in der Mitte des Schlitzes 48 geführt. Hierzu ist ein etwa gleich langer Schlitz 50 in der darunter liegenden Platte 36 angeordnet. Der Schlitz 50 hat eine geringere Breite als der Durchmesser einer Kugel 12. Dies ist in Figur 3 gut zu erkennen. Die Kugel 12 kann also nicht in den Schlitz 50 gelangen, sondern wird in diesem wie auf einer Schiene geführt. Dadurch laufen die Kugeln 12, wie in Figur 1 schematisch dargestellt, hintereinander auf dem Schlitz 50 in dem Zuführkanal, der von dem Schlitz 48 gebildet ist. An dem dem Reservoir 14 abgewandten Ende 52 ist der Schlitz 50 kreisförmig verbreitert. Die Verbreiterung ist größer als der Durchmesser einer Kugel 12. Die Kugel 12 kann also durch die Verbreiterung 52 nach unten gelangen. Eine solche Verbreiterung 60 kann auch am Ende des Schlitzes 48 vorgesehen sein. Dadurch wird die Bewegung nach unten erleichtert.

In der Basis 38 ist ein Verbindungskanal 54 in Form einer schrägen Bohrung vorgesehen. Diese ist insbesondere in Figur 1 gut zu erkennen. Der Verbindungskanal 54 verbindet die Verbreiterung 52 und den darüber liegenden Schlitz 48 bzw. die Verbreiterung 60 mit der Durchgangsbohrung 44. Der Verbindungskanal 54 ist breiter als der Durchmesser einer Kugel 12, so dass diese vom Zuführkanal 48 durch die Verbreiterung 60 und 52 und den Verbindungskanal 54 in den Ausgangskanal 30 gelangen kann.

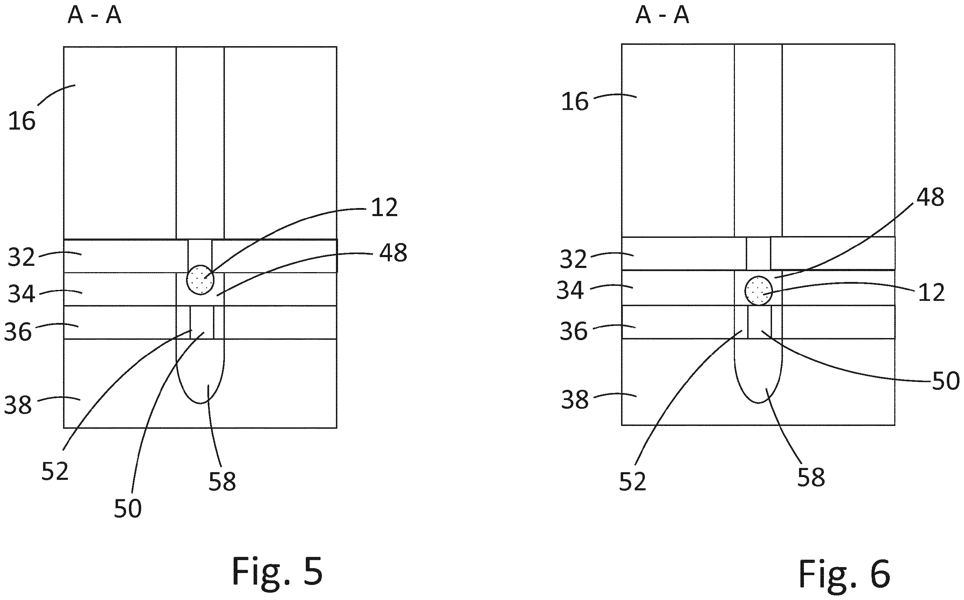

Fig.4 zeigt einen Querschnitt durch den Ausgangskanal 30 entlang einer vertikalen Schnittebene, die um einen Winkel von 90 Grad gegenüber der Schnittebene in Figur 1 gedreht ist. Dort erkennt man den Mündungsbereich 56 des Verbindungskanals 54 im Ausgangskanal 30 mit einer Kugel 12. Figur 5 und Figur 6 zeigen einen Querschnitt, der lateral in Längsrichtung der Schlitze 48 und 50 versetzt ist. Dort ist der Eingangsbereich 58 des Verbindungskanals 54 zu erkennen. In Figur 5 und 6 ist die Lage der Verbreiterung 52 zu erkennen, die mit dem Eingangsbereich 58 fluchtet.

Auf der Platte 34 mit dem Zuführkanal 48 liegt die Platte 32 auf. Die Platte 32 ist mit drei Bohrungen 62, 64 und 66 versehen, deren Durchmesser geringer ist, als der Durchmesser der verwendeten Kugeln 12. Dies ist in Figur 1 zu erkennen. Die Bohrungen sind im Maßstab aufgrund ihrer geringen Abmessungen in Figur 2b nicht gut zu erkennen und daher zusätzlich vergrößert dargestellt. Die Bohrungen 62, 64 und 66 liegen in einer Reihe in Längsrichtung versetzt oberhalb des Schlitzes 48. Die Bohrung 62 ist auf der dem Reservoir 14 abgewandten Seite des Schlitzes 48 oberhalb des verbreiterten Bereichs 60 und 52 der Schlitze 48 und 50 angeordnet. Die Bohrungen 64 und 66 sind in Längsrichtung versetzt im Bereich oberhalb der Schlitze 48 und 50 näher am Reservoir 14 angeordnet.

Fig.1 ist eine schematische Darstellung. Dort münden die Bohrungen 62, 64 und 66 in vertikalen Durchgangsbohrungen 68, 70 und 72 im Block 16. Die Durchgangsbohrungen 68, 70 und 72 verbinden die Bohrungen 62, 64 und 66 mit der Atmosphäre. Ein steuerbares Ventil oder ein Shutter (nicht dargestellt), steuert die Verbindung zur Atmosphäre. Dies ist durch Pfeile 74, 76 und 78 repräsentiert.

Der Block 16 ist mit einer seitlichen Bohrung 80 versehen. Die Bohrung 80 mündet innen im Bereich der Schlitze 48 und 50 und im Bereich der Bohrung 46. An die Bohrung 80 ist eine Gasquelle mit Inertgas, beispielsweise Stickstoff, angeschlossen. Das Gas steht unter einem erhöhten Druck. Auf diese Weise wird der gesamte Innenraum der Anordnung, einschließlich des mit einem Deckel 18 verschlossenen Reservoirs 14, der Schlitze 48 und 50, der Bohrungen 62, 64, 66, 68, 70 und 72, sowie der Bohrung 54 mit einem erhöhten Druck beaufschlagt. Wenn ein Ventil zur Atmosphäre in einer der Bohrungen 68, 70 oder 72 geöffnet wird, entsteht eine Druckdifferenz. Der Druck in den Schlitzen 48 und 50 ist höher, als der Druck in den Bohrungen. Entsprechend entsteht eine Saugwirkung. Eine Kugel im Zuführkanal wird beim Passieren einer Bohrung mit geöffnetem Ventil angesaugt.

Die Abmessungen des vom Schlitz 48 gebildeten Zuführkanals sind so gewählt, dass eine Kugel 12 keine andere Kugel passieren kann. Wenn also eine Kugel 12 aufgrund der Sogwirkung an einer Bohrung 62, 64 oder 66 fixiert wird, können keine Kugeln passieren. Der Durchgang im Zuführkanal ist vollständig blockiert. Figur 1 zeigt schematisch die Situation, wo eine Kugel an jeder der Bohrungen 62, 64 und 66 fixiert ist.

Die Herstellung der Kanäle 68, 70 und 72, wie sie in der schematischen Darstellung in Figur 1 dargestellt sind, ist schwierig. Die Bohrungen 62, 64 und 66 haben einen sehr geringen Durchmesser und liegen dicht beieinander. Die Herstellung lässt sich vereinfachen, indem eine weitere Platte 82 auf die Platte 32 aufgelegt wird. Die Platte 82 hat ebenfalls Bohrungen 40, 42 und 46, die anhand der anderen Platten bereits oben beschrieben wurden. Weiterhin hat die Platte 82 drei Schlitze 84, 86 und 88. Schlitz 84 mündet am ausgangsseitigen Ende 90 im Bereich oberhalb der Bohrung 62. Schlitz 86 mündet am ausgangsseitigen Ende 90 im Bereich oberhalb der Bohrung 64. Schlitz 88 mündet am ausgangsseitigen Ende 90 im Bereich oberhalb der Bohrung 66. Die ausgangsseitigen Enden 90 der Schlitze 84, 86 und 88 sind vergleichsweise schmal, so dass sie sich nicht bis oberhalb einer benachbarten Bohrung erstrecken. Im Übrigen verbreitern sich die Schlitze 84, 86 und 88 aber. Die Basis 16 hat Bohrungen, analog zu den Bohrungen 68, 70 und 72, die nun etwas breiter ausgeführt sein können und sich entweder von der Seite oder von oben bis zum atmosphärenseitigen, anderen Ende 92 der Schlitze 84, 86 und 88 erstrecken. Solche Schlitze können ohne großen Aufwand mit einem Laser in einer Platte hergestellt werden. Ein Ultraschall-Rüttler 94 dient zur hochfrequenten Bewegung der Anordnung. Mit dem Rüttler 94 wird die Beweglichkeit der Kugeln 12 verbessert. Diese können nicht verklemmen oder blockieren.

Die Anordnung arbeitet wie folgt:
In dem Reservoir 14 können bei geöffnetem Deckel Lotkugeln 12 eingefüllt werden. Anschließend wird das Reservoir 14 mit dem Deckel 14 wieder dicht verschlossen. Die Kugeln 12 fallen durch die Bohrungen 46 nach unten in den Schlitz 48. Dort werden sie nach rechts bewegt. Figur 1 zeigt eine erfindungsgemäße Anordnung, bei der der Zuführkanal 48 im Wesentlichen horizontal verläuft. Dabei wird die Bewegung durch das Druckgefälle bewirkt. Zur Verbesserung der Bewegung von Kugeln in Richtung Ausgangsöffnung kann der Zuführkanal 48 aber auch etwas nach unten in Richtung der Ausgangsöffnung geneigt sein. Dies kann durch eine keilförmige Platte erreicht werden oder durch Neigung der gesamten Anordnung. Die Kugeln 12 werden dabei durch den Schlitz 50 mittig im Zuführkanal 48 geführt, wie dies in den Figuren 3 und 6 gut zu erkennen ist.

Zunächst sind alle Ventile zur Atmosphäre geöffnet. Im Übergangsbereich zwischen Zuführkanal 48 und Bohrung 62, 64 und 66 werden die Kugeln 12 aufgrund der Druckdifferenz angesaugt. Dabei blockieren sie den Durchgang für nachfolgende Kugeln, wie dies in Figur 1 gut zu erkennen ist.

Wenn das Ventil am Kanal 68 geschlossen wird, wird die Kugel vor der Bohrung 62 freigegeben. Diese fällt aufgrund der Schwerkraft in den Verbindungskanal 54. Vom Verbindungskanal 54 fällt die Kugel 12 in den Ausgangskanal 30. In der Ausgangsöffnung 26 bleibt die Kugel zunächst stecken. Dabei wird die Ausgangsöffnung 26 verschlossen. Es wird ein erhöhter Druck im Ausgangskanal 30 und im Verbindungskanal 54 aufgebaut. Ein Drucksensor (nicht dargestellt) misst den Druck im Verbindungskanal 54. Der Druckanstieg im Verbindungskanal 54 ist ein Indiz dafür, dass sich eine Kugel im Bereich der Ausgangsöffnung 26 befindet.

Wenn die Kugel 12 in der Ausgangsöffnung 26 angekommen ist, wird das Ventil in der Bohrung 68 geöffnet. Das Ventil in der Bohrung 70 schließt. Dabei wird die mittlere der fixierten Kugeln freigegeben. Diese wird an der nächsten Bohrung 68 angesaugt und fixiert. Anschließend wird das Ventil in der Bohrung 70 wieder geöffnet und das Ventil in der Bohrung 72 geschlossen. Die Kugel, die vor der reservoirseitigen Bohrung 66 fixiert war, wird dabei freigegeben und vor der mittleren Bohrung 64 angesaugt und fixiert. Wenn das Ventil in der Bohrung 72 wieder geöffnet wird, wird eine neue Kugel aus dem Zuführkanal 48 vor der Bohrung 66 fixiert. Diese blockiert die Bewegung der nachfolgenden Kugeln. In dieser Weise wird immer nur eine einzelne Kugel zur Ausgangsöffnung 26 befördert.

Der Laserstrahl 24 wird mit einer Linse 22 oder einer Linsenanordnung im Ausgangskanal 30 fokussiert. Die Kugel in der Ausgangsöffnung 26 sitzt im Fokus des Laserstrahls 24. Die Energie des Laserstrahls ist so gewählt, dass die Kugel 12 schmilzt und das Lot auf einem darunterliegenden Substrat aufgebracht wird. Es versteht sich, dass die Ausgangsöffnung genau an der Stelle positioniert wird, wo das Lot verwendet werden soll. Die Anordnung verwendet keine beweglichen Teile. Die Geschwindigkeit, mit der eine Lotkugel aufgebracht werden kann, ist also lediglich durch die Schließzeit der Ventile begrenzt. Diese sind erheblich geringer, als die Zeit, die für die Bewegung einer Scheibe oder dergleichen erforderlich ist.

Ein IR-Sensor misst die Temperatur des Lots. Auf diese Weise kann die Laseraktivität gesteuert werden. Hierfür kann ein halbdurchlässiger Spiegel vorgesehen sein, mit dem die Laserstrahlung von der Seite in den Ausgangskanal 30 eingekoppelt wird. Der halbdurchlässige Spiegel lässt die IR-Strahlung nach oben durch. Der Laser kann als IR- oder VIS-Laser ausgebildet sein.

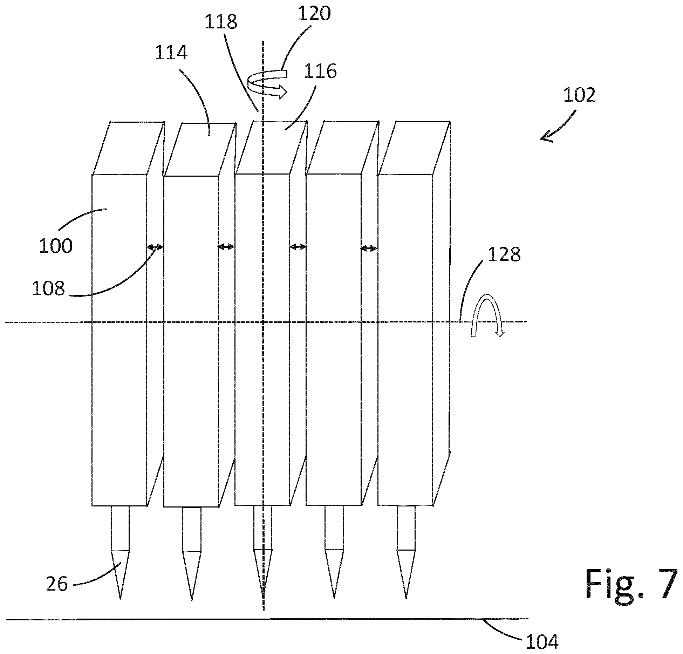

Im vorliegenden Ausführungsbeispiel wurde eine Anordnung gewählt, die als Ganzes im Wesentlichen einen quaderförmigen Modulblock 100 bildet. Lediglich die Ausgangsöffnung 26 ist in einer nach unten ragenden Spitze vorgesehen. Das ermöglicht es, dass mehrere solcher Module 100 nebeneinander angeordnet sein können, wie dies schematisch in Figur 7 illustriert ist. Die so gebildete Modulbaugruppe 102 kann über dem Substrat 104 bewegt werden oder das Substrat 104 wird unter der Modulbaugruppe 102 bewegt.

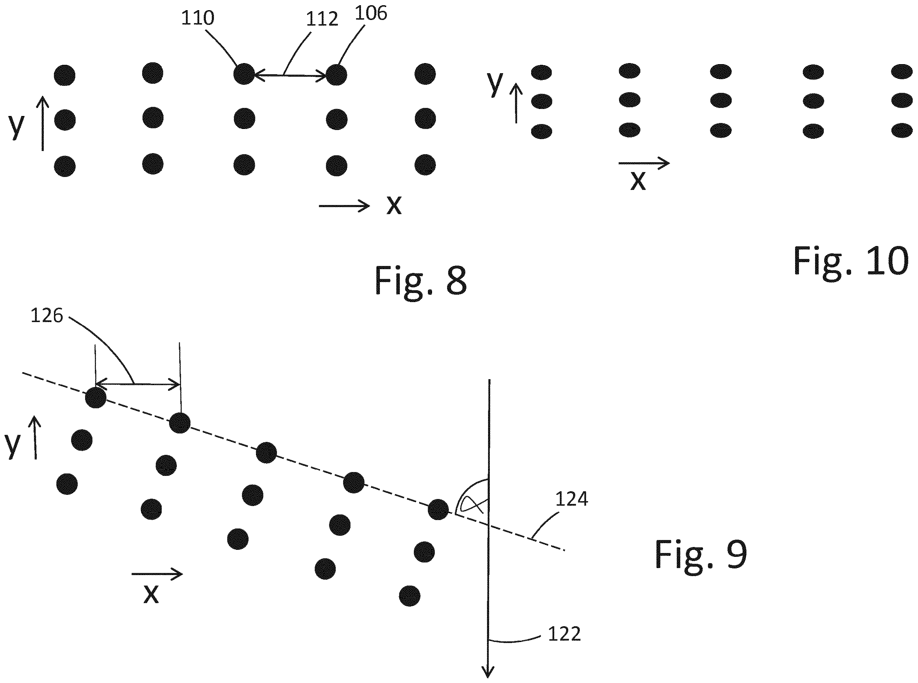

Figur 8 zeigt ein Muster, das entsteht, wenn jedes Modul 100 gleichzeitig eine Lotkugel auf dem Substrat aufbringt. Es versteht sich, dass sich durch eine geeignete zeitliche Steuerung jedes Moduls die Lage der Kontaktpunkte 106 in y-Richtung d.h. in Bewegungsrichtung des Substrats 14 bzw. der Modulbaugruppe 102, in gewünschter Weise verschieben lässt.

Die Abstände der Kontaktpunkte in x-Richtung ist bei der Modulbaugruppe ebenfalls einstellbar. Ein Abstand 112 zwischen zwei Kontaktpunkten 106 und 108 beispielsweise wird durch den Abstand der Ausgangsöffnungen der zugehörigen Module 114 und 116 bestimmt. Die Ausgangsöffnungen liegen im vorderen Bereich der Module 114 und 116. Wenn nun die Module 114 und/oder 116 um einen geringen Winkel um eine vertikale Achse rotiert werden, bilden die Module 114 und 116 einen Winkel. Dabei ändert sich der Abstand 108 der Module im Bereich der zugehörigen Ausgangsöffnungen.

Der Winkelbereich, der mit einer solchen individuellen Winkelbewegung der Module um eine vertikale Achse möglich ist, ist bei kompakten Modulbaugruppen begrenzt. Bei geringen Abständen zwischen den Modulen 100 ist es daher ggf. nicht möglich, alle Bereich abzudecken. Es ist daher bei der vorliegenden Anordnung vorgesehen, dass die gesamte Modulbaugruppe um eine gemeinsame Achse 118 beweglich angeordnet ist. Dies ist durch einen Pfeil 120 illustriert. Die Ausgangsöffnungen 26 liegen bei einer Rotation um diese Achse 118 nicht mehr in einer Reihe 124 senkrecht zur Bewegungsrichtung. Stattdessen bildet die Reihe 124 der Ausgangsöffnungen einen Winkel α mit der Bewegungsrichtung 122 des Substrats 104 oder der Modulbaugruppe, der ungleich 90° ist. Dies ist in Figur 9 dargestellt. Dadurch verringert sich der Abstand 126 zwischen den Kontaktpunkten gegenüber dem maximalen Abstand 112, wie er in Figur 8 beispielhaft illustriert ist.

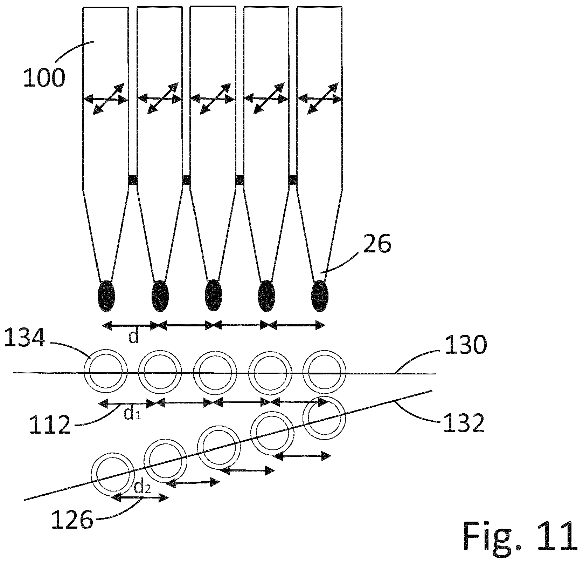

Die Wirkung einer solchen Drehung ist in Figur 11 noch einmal im Detail dargestellt. Mehrere Ausgangsöffnungen 26 liegen in einer Reihe, die durch eine Linie 130 repräsentiert ist. Die Lotkugeln 134, die auf dieser Reihe liegen, haben einen Abstand 112, der mit di bezeichnet ist. Wenn nun die Modulbaugruppe um einen Winkel gedreht wird, wie dies in Figur 7 zu erkennen ist, liegen die Lotkugeln auf einer Reihe 132. Der Abstand 126 in der Richtung von d ist nun mit d₂ bezeichnet und geringer als di.

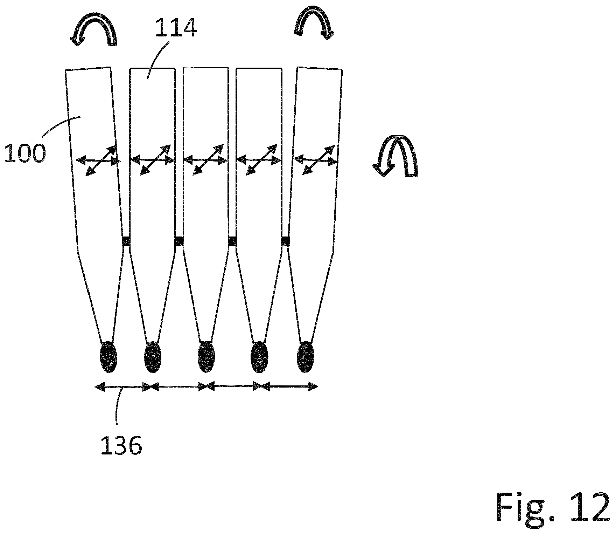

Die Drehung der gesamten Modulbaugruppe bewirkt, dass alle Abstände in gleichem Maße geändert werden können. Es ist aber auch möglich, einzelne Module gegeneinander zu verkippen. Figur 12 illustriert beispielhaft, wie sich der Abstand 136 durch Kippen des Moduls 100 aus einer vertikalen Ebene heraus um eine horizontale Achse senkrecht zur Darstellungsebene gegenüber dem Modul 114 verringert.

Man erkennt, dass durch geeignete Ausrichtung der Modulbaugruppe im Raum als Ganzes und durch die Ausrichtung der individuellen Module untereinander eine Anpassung der Lage der Kontaktpunkte möglich wird. Anders als bei bekannten Anordnungen können so größere Flächen des Substrats praktisch gleichzeitig mit Lot bestückt werden.

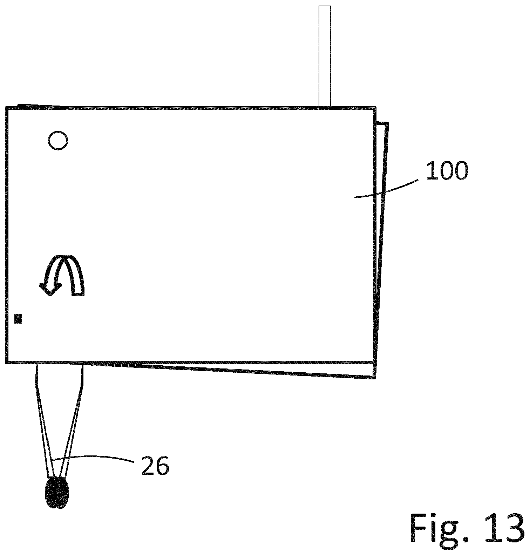

Eine Drehung der gesamten Modulbaugruppe um eine horizontale Achse 128, wie dies in der Seitenansicht in Figur 13 gezeigt ist, ermöglicht geringere Abstände zwischen den Kontaktpunkten bei gleicher Zeitauflösung. Dies ist in Figur 10 illustriert.

Es versteht sich, dass nicht nur Modulbaugruppen verwendet werden können, bei denen nur eine Reihe mit Modulen verwendet wird. In gleicher Weise können mehrere Module in Bewegungsrichtung hintereinander angeordnet werden, so dass ganze Flächen des Substrats gleichzeitig kontaktiert werden können.

## Patentansprüche

1. Anordnung (100) zum Aufbringen von Lot aus Lotkugeln (12) auf ein Substrat (104), enthaltend
(a) ein Reservoir (14) mit einer Vielzahl von Lotkugeln (12);
(b) eine Ausgabe-Öffnung (26) zum Ausgeben einer einzelnen Lotkugel (12);
(c) einen zwischen Reservoir (14) und Ausgabe-Öffnung (26) vorgesehenen Zuführkanal (48) zum Zuführen von Lotkugeln (12) aus dem Reservoir (14) zur Ausgabe-Öffnung (26);
(d) wobei der Zuführkanal (48) einen Öffnungsquerschnitt mit einem Durchmesser hat, der größer ist, als der Durchmesser einer der verwendeten Lotkugeln (12) und kleiner als der Durchmesser von zwei der verwendeten Lotkugeln (12);
(e) einen Saugkanal (68, 70, 72), der in dem Zuführkanal (48) mündet und der im Übergangsbereich (62, 64, 66) zwischen Saugkanal (68, 70, 72) und Zuführkanal (48) einen Querschnitt hat, der kleiner ist als der Querschnitt einer der verwendeten Lotkugeln (12);
(f) Mittel zur Erzeugung einer Druckdifferenz zwischen dem Zuführkanal (48) und dem Saugkanal (68, 70, 72), so dass der Druck in dem Saugkanal (68, 70, 72) geringer ist als in dem Zuführkanal (48) und eine im Zuführkanal (48) befindliche Lotkugel (12) am Übergangsbereich (62, 64, 66) des Saugkanals (68, 70, 72) ansaugbar ist; und
(g) Steuermittel zur Steuerung der Druckdifferenz derart, dass wenigstens eine Lotkugel (12) bei einer ersten Druckdifferenz am Übergangsbereich zwischen Saugkanal (68, 70, 72) und Zuführkanal (48) zurückgehalten wird und die Zufuhr weiterer Lotkugeln (12) blockiert und bei einer zweiten Druckdifferenz freigegeben wird;
wobei
(h) der Zuführkanal (48) in einen Ausgangskanal (30) mündet und mit diesem einen Winkel bildet, wobei der Ausgangskanal (30) vertikal oder annähernd vertikal ausgebildet ist und wobei der Zuführkanal (48) im Wesentlichen horizontal verläuft und die Bewegung der Lotkugeln (12) durch das Druckgefälle bewirkt wird, und
**dadurch gekennzeichnet, dass**
(i) drei oder mehr Saugkanäle (68, 70, 72) in Bewegungsrichtung der Lotkugeln (12) hintereinander im Zuführkanal (48) münden, und die Steuermittel derart eingerichtet sind, dass die Ausgabeöffnungs-seitige Lotkugel freigebbar ist, während zumindest eine Lotkugel an einem der anderen Saugkanäle zurückhaltbar ist.

2. Anordnung nach Anspruch 1, **dadurch gekennzeichnet, dass** der Zuführkanal (48) mit einem Gasdruck oberhalb des Atmosphärendrucks beaufschlagt ist.

3. Anordnung nach Anspruch 2, **dadurch gekennzeichnet, dass** der Zuführkanal (48) mit einer Gasquelle mit Stickstoff oder einem anderen Inertgas mit erhöhtem Druck verbunden ist.

4. Anordnung nach Anspruch 2 oder 3, **dadurch gekennzeichnet, dass** die Saugkanäle (68, 70, 72) mit der Atmosphäre verbunden sind und die Steuermittel einen Shutter oder ein Ventil zum Herstellen und Unterbrechen der Verbindung zwischen Saugkanal (68, 70, 72) und Atmosphäre umfassen.

5. Anordnung nach einem der vorgehenden Ansprüche, **dadurch gekennzeichnet, dass** der
Ausgangskanal (30) die Ausgangsöffnung (26) aufweist, über welche Lot auf einem Substrat (104) aufbringbar ist, und ein Laser enthalten ist, dessen Strahlung (24) durch den Ausgangskanal (30) zur Ausgangsöffnung (26) leitbar ist, und dessen Strahlung (24) derart ausgebildet ist, dass das Lot der Lotkugel (12) durch Einwirkung der Strahlung auf das Substrat (104) befördert wird.

6. Anordnung nach einem der vorgehenden Ansprüche, **dadurch gekennzeichnet, dass** eine Plattenanordnung aus mehreren plan aufeinanderlegbaren und fixierbaren Platten (32, 34, 36, 82) vorgesehen ist, wobei der Zuführkanal (48) und die Saugkanäle zumindest teilweise von Schlitzen (84, 86, 88) in den Platten der Plattenanordnung gebildet sind.

7. Anordnung nach Anspruch 6, **dadurch gekennzeichnet, dass** die Plattenanordnung eine der Zuführkanal-Platte (34) mit dem Zuführkanal (48) aufweist und eine daran anliegende Führungs-Platte (36), die im Bereich des Zuführkanals (48) einen Führungsschlitz (50) zum Führen der Bewegung der Lotkugeln im Zuführkanal (48) aufweist, der eine geringere Breite hat als die Breite des Zuführkanals.

8. Anordnung nach Anspruch 6 oder 7, **dadurch gekennzeichnet, dass** die Plattenanordnung eine der Zuführkanal-Platte (34) benachbarte erste Saugkanal-Platte (32) aufweist, die in dem dem Reservoir (14) abgewandten Endbereich des Zuführkanals (48) in Bewegungsrichtung der Lotkugeln hintereinander angeordnete Bohrungen (62, 64, 66) aufweist, welche den Übergangsbereich zwischen Saugkanal (68, 70, 72) und Zuführkanal (48) bilden und auf der der Zuführkanal-Platte (34) abgewandten Seite der ersten Saugkanal-Platte (32) eine zweite Saugkanal-Platte (82), welche Schlitze (84, 86, 88) aufweist, welche die Bohrungen (62, 64, 66) mit der Atmosphäre oder einem zur Atmosphäre führenden Kanal (68, 70, 72) verbinden.

9. Anordnung nach einem der vorgehenden Ansprüche, **dadurch gekennzeichnet, dass** Reservoir (14), die Ausgabe-Öffnung (26), der Zuführkanal (48) und der Saugkanal (68, 70, 72) in einem Modul (100) vereint sind und wenigstens ein weiteres, gleichartiges Modul (114, 116) vorgesehen ist, das mit dem Modul (100) eine Modulbaugruppe (102) bildet, wobei die Ausgabe-Öffnungen (26) der Module (100, 114, 116) nebeneinander oberhalb eines Substrats (104) positionierbar sind.

10. Anordnung nach Anspruch 9, **dadurch gekennzeichnet, dass** die Module (100) beabstandet zueinander angeordnet sind und die Lage zumindest eines der Module zu einer Achse senkrecht zur Substratebene einstellbar ist.

11. Anordnung nach Anspruch 9 oder 10, **dadurch gekennzeichnet, dass** die Lage der Modulbaugruppe (102) zu einer Achse (118, 128) senkrecht und/oder parallel zur Substratebene einstellbar ist.

## Claims

1. Assembly (100) for placing solder from solder balls (12) on a substrate (104), comprising
(a) a reservoir (14) with a plurality of solder balls (12);
(b) an exit opening (26) for releasing one single solder ball (12);
(c) a feeding channel (48) provided between the reservoir (14) and the exit opening (26) for feeding solder balls (12) from the reservoir (14) to the exit opening (26);
(d) wherein the feeding channel (48) has an opening cross section with a diameter which is larger than the diameter of one of the used solder balls (12) and smaller than the diameter of two of the used solder balls (12);
(e) a suction channel (68, 70, 72) ending in the feeding channel (48) and having a cross section in the transition range (62, 64, 66) between the suction channel (68, 70, 72) and the feeding channel (48) which is smaller than the cross section of one of the used solder balls (12);
(f) means for generating a pressure difference between the feeding channel (48) and the suction channel (68, 70, 72) whereby the pressure in the suction channel (68, 70, 72) is smaller than in the feeding channel (48) and a solder ball (12) present in the feeding channel (48) can be sucked in at the transition range (62, 64, 66) of the suction channel (68, 70, 72); and
(g) control means for controlling the pressure difference in such a way that at least one solder ball (12) is held back at a first pressure difference at the transition range between the suction channel (68, 70, 72) and the feeding channel (48) and the feeding of further solder balls (12) is blocked and is released with a second pressure difference;
wherein
(h) the feeding channel (48) ends in an exit channel (30) and forms an angle therewith, wherein the exit channel (30) extends vertical are almost vertical and wherein the feeding channel (48) extends essentially horizontal and the movement of the solder balls (12) is caused by the pressure difference, and
**characterized in that**
(i) three or more suction channels (68, 70, 72) are in the moving direction of the solder balls (12) consecutively connected to the feeding channel (48) and the control means are configured in such a way that the solder ball on the side of the exit opening can be released while at least one solder ball can be held back at one of the other suction channels.

2. Assembly according to claim 1, **characterized in that** the feeding channel (48) is exposed to a gas pressure above atmospheric pressure.

3. Assembly according to claim 2, **characterized in that** the feeding channel (48) is connected to a gas source with nitrogen or another inert gas having an increased pressure for this purpose.

4. Assembly according to claim 2 or 3, **characterized in that** the suction channels (68, 70, 72) are connected to the atmosphere and the control means comprise a shutter or a valve for establishing and interrupting the connection between the suction channel (68, 70, 72) and the atmosphere.

5. Assembly according to any of the preceding claims, **characterized in that** the exit channel (30) is provided with the exit opening (26) used to place the solder onto the substrate (104) and a laser is provided emitting radiation (24) which extends through the exit channel (30) to the exit opening (26) and where the radiation (24) is configured such, that the solder of the solder ball (12) is transferred onto the substrate (104) by the impact of the radiation.

6. Assembly according to any of the preceding claims, **characterized in that** a sheet assembly is provided with several plane sheets (32, 34, 36, 82) adapted to be laid one on the other and configured to be fixed in such position, wherein the feeding channel (48) and the suction channels are formed by slits (84, 86, 88) in the sheets of the sheet assembly.

7. Assembly according to claim 6, **characterized in that** the sheet assembly comprises a feeding channel sheet (34) with the feeding channel (48) and an adjacent guiding sheet (36) which is provided with a guiding slit (50) in the range of the feeding channel (48) for guiding the movement of the solder balls in the feeding channel (48), the guiding slit having a smaller width than the width of the feeding channel.

8. Assembly according to claim 6 or 7, **characterized in that** the sheet assembly is provided with a first suction channel sheet (32) adjacent to the feeding channel sheet (34), the suction channel sheet having boreholes (62, 64, 66) which are positioned one next to the other in a line in the moving direction of the solder balls in the end range remote to the reservoir (14), the boreholes forming the transition range between the suction channel (68, 70, 72) and the feeding channel (48) and a second suction channel sheet (82) on the side of the first suction channel sheet (32) which is remote to the feeding channel sheet (34), the second suction channel sheet having slits (84, 86, 88) connecting the boreholes (62, 64, 66) to the atmosphere or to a channel (68, 70, 72) connected to the atmosphere.

9. Assembly according to any of the preceding claims, **characterized in that** the reservoir (14), the exit opening (26), the feeding channel (48) and the suction channel (68, 70, 72) are united in one module (100) and at least one further, equivalent module (114, 116) is provided which together with the module (100) forms a modular assembly (102), wherein the exit openings (26) of the modules (100, 114, 116) are positioned next to each other above the substrate (104).

10. Assembly according to claim 9, **characterized in that** the modules (100) are positioned remote to each other and the position of at least one of the modules can be adjusted relative to an axis which is perpendicular to the substrate plane.

11. Assembly according to claim 9 or 10, **characterized in that** the position of the modular assembly (102) is configured to be adjusted relative to an axis (118, 128) which is perpendicular and/or parallel to the substrate plane.

## Revendications

1. Disposition (100) destinée à déposer de la soudure constituée de billes de soudure (12) sur un substrat (104), comprenant
(a) un réservoir (14) contenant une multitude de billes de soudure (12) ;
(b) un orifice de distribution (26) destiné à distribuer les billes de soudure (12) une par une ;
(c) un canal d'amenée (48) prévu entre le réservoir (14) et l'orifice de distribution (26) et destiné à amener des billes de soudure (12) du réservoir (14) dans l'orifice de distribution (26) ;
(d) le canal d'amenée (48) possédant une section d'ouverture d'un diamètre supérieur au diamètre de l'une des billes de soudure (12) utilisées et inférieur au diamètre de deux billes de soudure (12) utilisées ;
(e) un canal d'aspiration (68, 70, 72) débouchant dans le canal d'amenée (48) qui possède, dans la zone de transition (62, 64, 66) située entre le canal d'aspiration (68, 70, 72) et le canal d'amenée (48), une section transversale inférieure à la section transversale de l'une des billes de soudure (12) utilisées ;
(f) des moyens destinés à générer une différence de pression entre le canal d'amenée (48) et le canal d'aspiration (68, 70, 72) de sorte que la pression dans le canal d'aspiration (68, 70, 72) est plus basse que dans le canal d'amenée (48) et qu'une bille de soudure (12) se trouvant dans le canal d'amenée (48) peut être aspirée dans la zone de transition (62, 64, 66) du canal d'aspiration (68, 70, 72); et
(g) des moyens de commande destinés à commander la différence de pression de sorte qu'au moins une bille de soudure (12) est retenue dans la zone de transition située entre le canal d'aspiration (68, 70, 72) et le canal d'amenée (48) en cas de première différence de pression et que l'amenée de billes de soudure (12) supplémentaires est bloquée et libérée en cas de seconde différence de pression ;
(h) le canal d'amenée (48) débouchant dans un canal de sortie (30) en formant avec celui-ci un angle, le canal de sortie (30) étant configuré verticalement ou presque verticalement et le canal d'amenée (48) s'étendant essentiellement horizontalement et le déplacement des billes de soudure (12) étant provoqué par la chute de pression, et
**caractérisée en ce que**
(i) trois ou plus de canaux d'aspiration (68, 70, 72) débouchent dans le sens de déplacement des billes de soudure (12) les uns derrière les autres dans le canal d'amenée (48), et les moyens de commande sont aménagés de sorte que la bille de soudure située du côté de l'orifice de distribution peut être libérée pendant qu'au moins une bille de soudure peut être retenue dans l'un des autres canaux d'aspiration.

2. Disposition selon la revendication 1, **caractérisée en ce qu'**une pression gazeuse supérieure à la pression atmosphérique est appliquée au canal d'amenée (48).

3. Disposition selon la revendication 2, **caractérisée en ce que** le canal d'amenée (48) est connecté à une source gazeuse d'azote ou de tout autre gaz inerte présentant une pression élevée.

4. Disposition selon la revendication 2 ou 3, **caractérisée en ce que** les canaux d'aspiration (68, 70, 72) sont connectés à l'atmosphère et les moyens de commande comprennent un obturateur ou une soupape destinés à établir ou interrompre la connexion entre le canal d'aspiration (68, 70, 72) et l'atmosphère.

5. Disposition selon l'une quelconque des revendications précédentes, **caractérisée en ce que** le canal de sortie (30) présente l'orifice de sortie (26) par l'intermédiaire duquel de la soudure peut être appliquée sur un substrat (104), et qu'elle comprend un laser dont le rayonnement (24) peut être guidé par le canal de sortie (30) vers l'orifice de sortie (26) et dont le rayonnement (24) est configuré de sorte que la soudure de la bille de soudure (12) est transportée grâce à l'effet du rayonnement sur le substrat (104).

6. Disposition selon l'une quelconque des revendications précédentes, **caractérisée en ce qu'**il est prévu une disposition de plaques composée de plusieurs plaques (32, 34, 36, 82) pouvant être fixées et posées les unes sur les autres de manière plane, le canal d'amenée (48) et les canaux d'aspiration étant formés dans les plaques de la disposition de plaques au moins partiellement de fentes (84, 86, 88) situées.

7. Disposition selon la revendication 6, **caractérisée en ce que** la disposition de plaques présente une plaque de canal d'amenée (34) avec le canal d'amenée (48) et une plaque de guidage (36) adjacente à celle-ci qui présente dans la zone du canal d'amenée (48) une fente de guidage (50) destinée à guider le déplacement des billes de soudure dans le canal d'amenée (48) qui possède une largeur inférieure à la largeur du canal d'amenée.

8. Disposition selon la revendication 6 ou 7, **caractérisée en ce que** la disposition de plaques présente une première plaque de canal d'aspiration (32) adjacente à la plaque de canal d'amenée (34) qui présente dans la zone terminale du canal d'amenée (48) opposée au réservoir (14) des perçages (62, 64, 66) disposés les uns derrière les autres dans le sens de déplacement des billes de soudure et formant la zone de transition située entre le canal d'aspiration (68, 70, 72) et le canal d'amenée (48) et présente sur la face de la première plaque de canal d'aspiration (32) opposée à la plaque de canal d'amenée (34) une seconde plaque de canal d'aspiration (82) présentant des fentes (84, 86, 88) qui relient les perçages (62, 64, 66) à l'atmosphère ou à un canal (68, 70, 72) menant à l'atmosphère.

9. Disposition selon l'une quelconque des revendications précédentes, **caractérisée en ce que** le réservoir (14), l'orifice de distribution (26), le canal d'amenée (48) et le canal d'aspiration (68, 70, 72) sont réunis dans un module (100) et qu'il est prévu au moins un autre module (114, 116) similaire qui forme avec le module (100) un ensemble de modules (102), les orifices de distribution (26) des modules (100, 114, 116) pouvant être positionnés les uns à côté des autres au-dessus d'un substrat (104).

10. Disposition selon la revendication 9, **caractérisée en ce que** les modules (100) sont disposés en étant espacés les uns par rapport aux autres et la position d'au moins l'un des modules peut être réglée par rapport à un axe perpendiculairement au plan du substrat.

11. Disposition selon la revendication 9 ou 10, **caractérisée en ce que** la position de l'ensemble de modules (102) peut être réglée par rapport à un axe (118, 128) perpendiculairement et/ou parallèlement au plan du substrat.
